# EUROPEAN PATENT APPLICATION

(11) **EP 1 481 782 A1**
(43) Date of publication of application: **01.12.2004**
(21) Application number: 03425344.3
(22) Date of filing: 28.05.2003
(51) Int. Cl.: B28D 1/12

(54) **Cutting tool for stone materials**

(71) Applicant: Filippini Fantoni, Alberto, 20100 Milano (IT); Filippini Fantoni, Uberto, 20100 Milano (IT)
(72) Inventor: Filippini Fantoni, Alberto, 20100 Milano (IT); Filippini Fantoni, Uberto, 20100 Milano (IT)
(74) Representative: Petruzziello, Aldo

(57) **Abstract**

A cutting tool (1, 10) for stone materials (5) comprising a cutting support (2, 12) having a thickness (s) and supporting a plurality of abrasive segments (3) disposed on a cutting edge thereof and protruding outward therefrom to cause cutting of the stone material. The abrasive segments (3) comprise cutting abrasive segments (30) and widening abrasive segments (40) wherein the cutting abrasive segments (30) have a greater height with respect to the widening abrasive segments (40) and wherein the widening abrasive segments (40) have a greater thickness with respect to the thickness (s) of said support (1, 12) and to the thickness of said cutting abrasive sectors (30).

## Description

The present invention refers to cutting of stone materials (marbles, granite and the like) through the use of cutting tools, such as straight reciprocating blades, rotating disks, band saws, toothed belts and chains which form suitable supports whereon abrasive segments are applied by various welding techniques. Said abrasive segments are obtained by sintering and contain abrasive particles of various types, generally of synthetic diamond.

Various techniques and tools are known at present for cutting stone materials. However, said techniques have some drawbacks.

For example, reciprocating blades with diamond segments are not suitable for cutting hard stone materials, such as granite. The current techniques involve the use of metal grit and water, during cutting, with a great waste of material and energy and consequently considerable pollution.

Thus rotating diamond disks are generally used for cutting granite. However, this technique too holds various drawbacks. For example, with this technique it is not possible to obtain large-sized slabs. In fact, for reasons of mechanical strength, the thickness of the disk must increase exponentially with respect to the increase in diameter. As a result, cutting disks with a great thickness cause high energy consumption and waste of stone material.

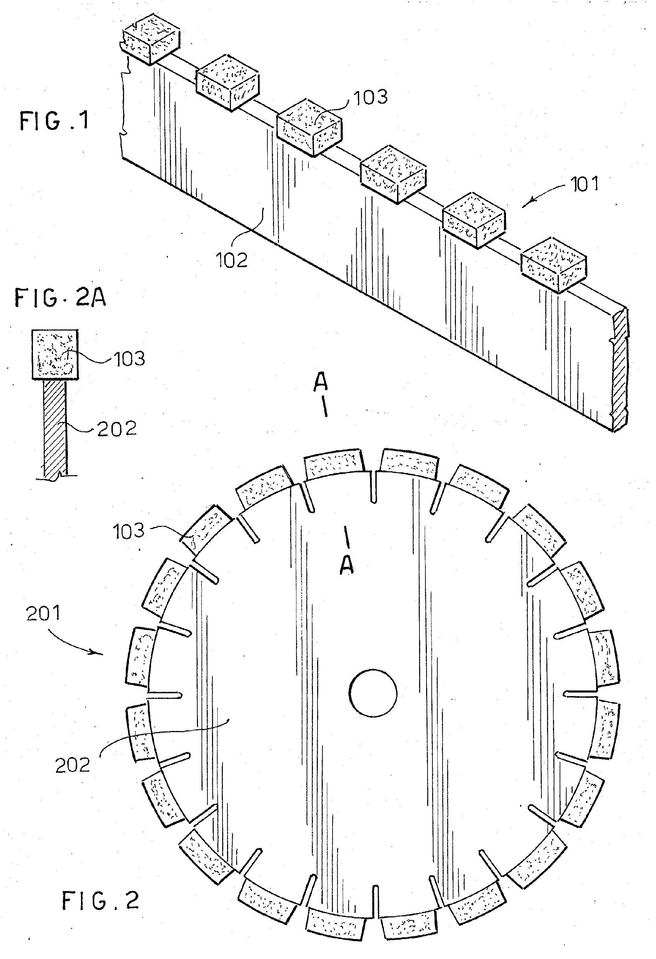

Figures 1 and 2 illustrate two cutting tools according to the prior art, a reciprocating blade 101 and a rotating disk 201, respectively. The tools 101 and 201 comprise respective supports in the form of a blade with a rectangular plate 102 and a disk-shaped plate 202. On one of the linear edges of the support blade 102 and on the circumferential edge of the disk 202 there are welded/brazed a plurality of diamond segments 103 arranged spaced apart from one another. As shown also in the sectional view 2A, the diamond segments 103 have a greater thickness with respect to the thickness of the relative support (blade 102 or disk 202) to allow the passage of the support during cutting.

The cutting method with said tools of the prior art thus provides for the specific cutting pressure to be the result of the maximum load that can be borne by the support (blade 102 or disk 202) divided by the total contact area between the material to be cut and the diamond segments 103. On this basis, the greater the thickness of the segments 103 is, the less the specific pressure on the material to be cut will be and thus the less will be the ability of the diamond tips of the segments 103 to penetrate the material to be removed. This leads to a greater deviating force which tends to make the segments 103 deviate from a straight path, with the result of a poor cutting quality.

Furthermore, stone materials are known to have considerable compression strength and a low tensile strength and bending strength. Notwithstanding this, the diamond segments 103 of conventional tools work completely in compression in the compact material, that is, against the maximum resistance of said material.

The object of the present invention is to eliminate the drawbacks of the prior art by providing a cutting tool suitable to be employed for cutting particularly hard stone materials.

Another object of the present invention is that of providing such a cutting tool able to allow a high cutting precision and quality and reduced waste of material.

Yet another object of the present invention is to provide such a cutting tool that is able to ensure a high cutting efficiency with a minimum waste of energy.

These objects are achieved in accordance with the invention with the characteristics listed in appended independent claim 1.

Advantageous embodiments of the invention are apparent from the dependent claims.

The cutting tool for stone materials according to the invention comprises a cutting support supporting a plurality of abrasive segments disposed on a cutting edge thereof and protruding outward therefrom to cause cutting of the stone material.

The peculiar characteristic of the invention is represented by the fact that said abrasive segments comprise abrasive cutting segments and abrasive widening segments. The abrasive widening segments are greater in thickness with respect to the thickness of the support and to the thickness of the abrasive cutting segments.

In this manner, the abrasive cutting segments which are the first to encounter the material to be cut work only in compression, as in tools of the prior art. On the other hand, the abrasive widening segments which encounter the material in the edges of the cut produced by the cutting segments, work in traction and bending, causing breaking up of the material to be cut with greater ease.

Further characteristics of the invention will be made clearer by the detailed description that follows, referring to purely exemplary and therefore non-limiting embodiment thereof, illustrated in the appended drawings, in which:
Figure 1 is a broken off perspective view, diagrammatically illustrating a blade tool for cutting stone material according to the prior art;
Figure 2 is a side view, diagrammatically illustrating a disk tool for cutting stone material according to the prior art;
Figure 2A is a cross sectional view along the sectional plane A-A of Figure 2;
Figure 3 is a broken off perspective view, diagrammatically illustrating a blade tool for cutting stone material according to the invention;
Figure 4 s a side view, diagrammatically illustrating a disk tool for cutting stone material according to the invention;
Figures 4A and 4B are cross sectional views along the sectional planes A-A and B-B, respectively, of Figure 4;
Figure 5 is a broken off sectional view of a stone material, illustrating the cut made by a tool according to the invention;
Figure 6 is a perspective view of a first embodiment of a cutting segment according to the invention;
Figure 7 is a perspective view of a first embodiment of a widening segment according to the invention;
Figure 8 is perspective view of a second embodiment of a widening segment according to the invention;
Figure 9 is a perspective view of a second embodiment of a cutting segment according to the invention;
Figure 10 is a perspective view of a third embodiment of a widening segment according to the invention;
Figure 11 is a perspective view of a fourth embodiment of a widening segment according to the invention;
Figure 12 is a perspective view illustrating application on a supporting blade of two widening segments according to a fourth embodiment of Figure 11;
Figure 13 is a broken off perspective view of a further embodiment of the blade tool of Figure 3;
Figure 14 is a side view illustrating a further embodiment of the disk tool of Figure 4;
Figure 15 is a broken off side view illustrating an embodiment of a chain tool according to the invention;
Figures 15A and 15B are cross sectional views along the sectional planes A-A and B-B, respectively, of Figure 15;
Figure 16 is a broken off side view illustrating an embodiment of a band saw tool according to the invention;
Figure 17 is a broken off perspective view illustrating an embodiment of a rubberised belt tool according to the invention;
Figures 17A and 17B are cross sectional views taken along the sectional planes A-A and B-B, respectively, of Figure 17.

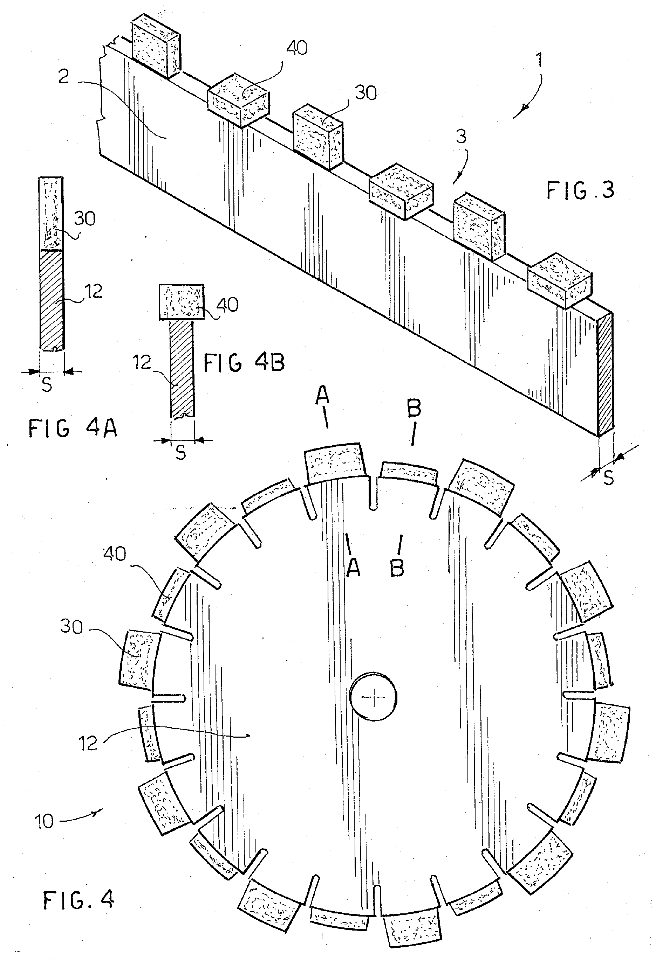

A cutting tool for stone materials according to the invention is described with the aid of Figures 3-17.

With reference for now to Figures 3 and 4, two cutting tools 1, 10 in the form respectively of a reciprocating blade and a rotating disk are illustrated. The blade tool 1 comprises a support 2 taking the form of a rectangular plate having a linear upper cutting edge. Whilst the disk tool 10 comprises a support 12 taking the form of a disk-shaped plate having a circumferential cutting edge.

On the linear cutting edge of the blade-type support 2 and on the circumferential cutting edge of the disk-type support 12 there are fixed, by means of welding or brazing, a plurality of abrasive segments or sectors 3 obtained by sintering of abrasive particles, such as, for example, particles of synthetic diamond.

The abrasive segments 3 comprise cutting abrasive segments 30 and widening abrasive segments 40.

As shown better also in Figures 4A and 4B, the height of the cutting abrasive segments 30 is greater than the height of the widening abrasive segments 40. What is meant by the height of the abrasive segments 3 is the distance by which said segments protrude from the cutting edge of the relative support.

The thickness of the cutting abrasive segments 30 is smaller than the thickness of the widening abrasive segments 40. What is meant by thickness of the abrasive segments 3 is their transverse measurement.

Clearly the thickness of the abrasive widening segments 40 must be greater than the thickness of the relative support 2, 12, indicated by s, to allow the passage of the support in the cut formed in the stone material.

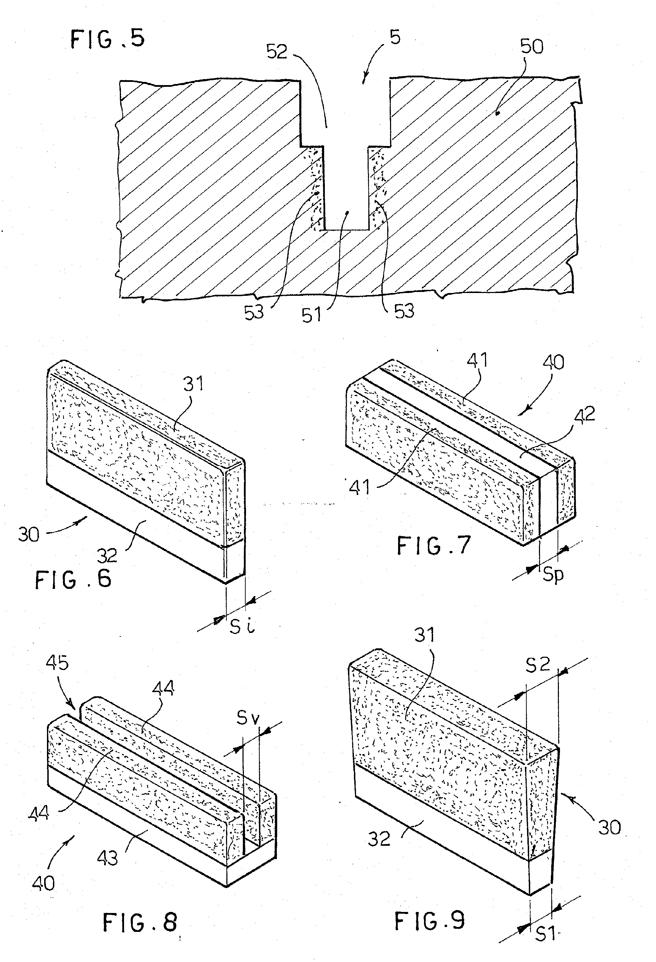

As shown in Figure 5, when a cut 5 is made in a hard stone 50 by means of a tool 1, 10 according to the invention, the cutting segments 30, which are longer, penetrate into the stone 50 before the widening segments 40, which are shorter. As a result the cutting segments 30 produce a cut of narrow width 51, whilst the widening segments 40 produce a widening cut 52 with a larger width than the narrow cut 51. Thus the cut 5 takes on a typical step shape.

It should be noted that the portions of stone material 53 (illustrated with a dotted line) disposed on the flanks of the narrow cut 51, beneath the widening cut 52, prove to have less strength with respect to the remaining compact material of the hard stone 50. As a result the portions of material 53 are more friable and are demolished with greater ease by the widening segments 40.

Since the cutting segments 30 must work in compression by opening the cut 51, in accordance with the invention, an effort has been made to reduce the thickness thereof to a minimum so as to increase as much as possible the specific pressure thereon during cutting. In this manner, the widening segments 40 are allowed to work substantially in traction and bending on the remaining volume of material 53 to be removed. In fact, it must be considered that the portions of material 53 disposed at the sides of the cutting groove 51 lack cohesion on one side and are therefore subject to tensile and bending load toward the part of the cut 51 lacking material.

In this manner, the volume of material to be removed in compression is reduced to the minimum possible and the volume of material to be removed in traction/bending is increased to the maximum possible. As a result a considerable saving is achieved in energy and in the abrasive material used for the segments 3.

Furthermore, with said arrangement, the speed of descent (advancement of the tool at the same cutting speed) is improved, as are both the precision and straightness of the cut and the possibility of making narrower cuts,

Furthermore, thanks to this invention, sawing of hard stones, such as granite, by means of reciprocating saws 1 becomes possible, without the use of grit which tends to soil the material, with the advantage that these blades can be mounted on operating machines commonly in use.

Figure 6 illustrates a first embodiment of a cutting segment 30, wherein the cutting segment 30 comprises an active upper portion 31 consisting of abrasive particles and a lower passive portion 32 without abrasive particles. The lower passive portion 32 is welded to the edge of the support 2, 12 and protrudes outward therefrom. The cutting segment 30 has a thickness sᵢ substantially smaller or equal to the thickness of its own support 2, 12, indicated by s.

The height of the passive portion 32 is substantially equal to the height of the widening segment. In fact, the passive portion 32 does not have to make any cut in the stone material since removal of the material at the level thereof is performed by the widening segment 40. In this manner correct and uniform use of the abrasive segments 30, 40 is ensured and consequently a more or less identical life for each of them.

Figure 7 shows a first embodiment of a widening segment 40, wherein the widening segment 40 has a passive central part 42 without abrasive particles, included between two active side parts 41 consisting of abrasive particles. The passive central part 42 corresponds to the cut already made by the cutting segments 30. Therefore, the thickness sₚ of the passive central part 42 is equal to or slightly less than the thickness sᵢ of the cutting segments 30.

Figure 8 shows a second embodiment of a widening segment 40, wherein the widening segment 40 is substantially U-shaped in cross section, and comprises a passive base portion 43 without abrasive particles, two active side portions 44 provided with abrasive particles and an empty central portion 45. The empty central portion 45 has a width sᵥ substantially equal to or slightly smaller than the thickness sᵢ of said cutting segment 30.

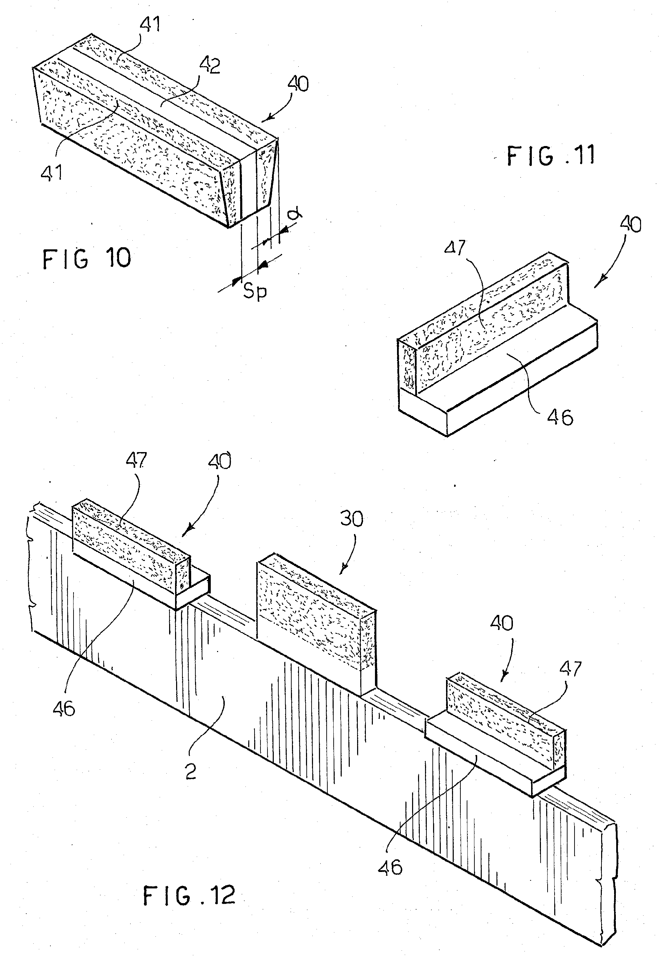

Figure 9 illustrates a second embodiment of a cutting segment 30 which has a substantially tapered cross section, increasing in size toward the outside, with a base thickness s₁ smaller than or equal to the thickness s of the support and a thickness s₂ of the upper end greater than the thickness s of the support.

Figure 10 illustrates a third embodiment of a widening segment 40 which has a substantially tapered cross-section, increasing in size toward the outside, wherein the side walls are inclined at an angle of α ≥ 1° with respect to a vertical plane.

The tapered segments illustrated in the embodiments of Figures 9 and 10 serve to optimise cutting and allow uniform wear thereof.

Figure 11 illustrates a fourth embodiment of a widening segment 40 which is substantially L-shaped in cross section with a passive base part 46 without abrasive particles and an active part 47, provided with abrasive grains and at right angles to the base part 46.

The thickness of the base 46 is substantially equal to or slightly greater than the thickness of the support 2, 12, so that the active abrasive part 47 is situated laterally outside the support. In this manner, as shown in Figure 12, these widening segments 40 are disposed between the cutting segments 30, with the abrasive part 47 alternately protruding from one side and from the other with respect to the support 2, 12.

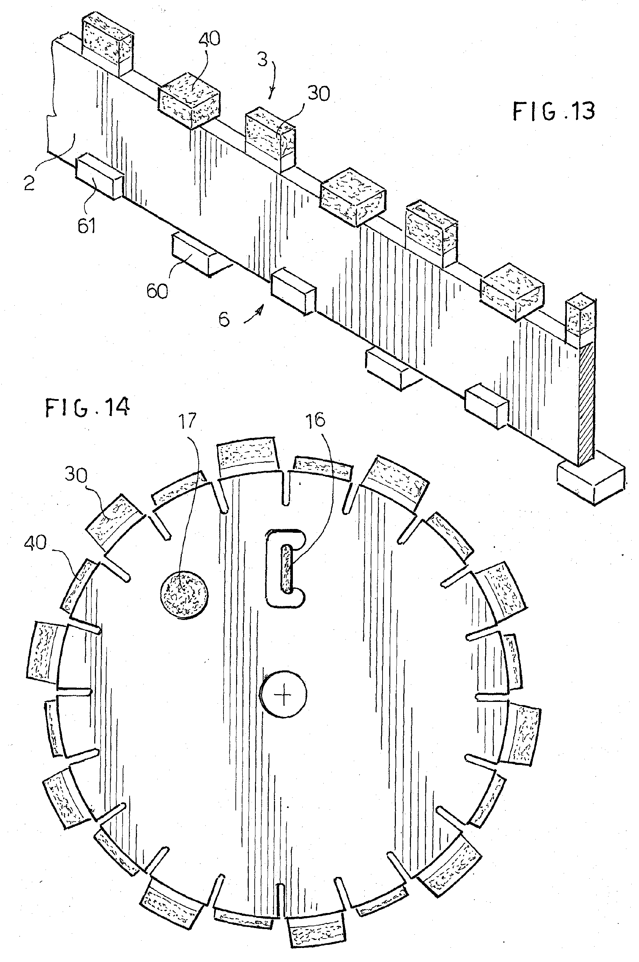

Figure 13 illustrates a second embodiment of a reciprocating blade 1, wherein guide sectors 6, of abrasive material, are welded/brazed to the support 2, disposed in different positions from the cutting edge of the blade 2 to guide the blade during cutting. In particular in said embodiment guide sectors 60 on the opposite edge to the cutting edge, alternating with guide sectors 61 disposed recessed on the flanks of the blade, are illustrated.

Figure 14 illustrates a second embodiment of a rotating disk 10, wherein guide sectors 16 and/or guide pads 17, of abrasive material, are soldered/brazed on the support 12, disposed in different positions from the circumferential cutting edge of the disk 12 to guide the disk during cutting.

The use of the guide sectors 60, 61 in the blades 1 and of the guide sectors and pads 16, 17 in the disks 10 allows the use of supports 2, 12 having a reduced thickness, in that they are stabilized in cutting. Furthermore, both the guide sectors 60, 61 of the blade 1 and the guide pads and segments 16 and 17 of the disk 10 can be used advantageously also in conventional blades and conventional disks, like those illustrated in Figures 1 and 2.

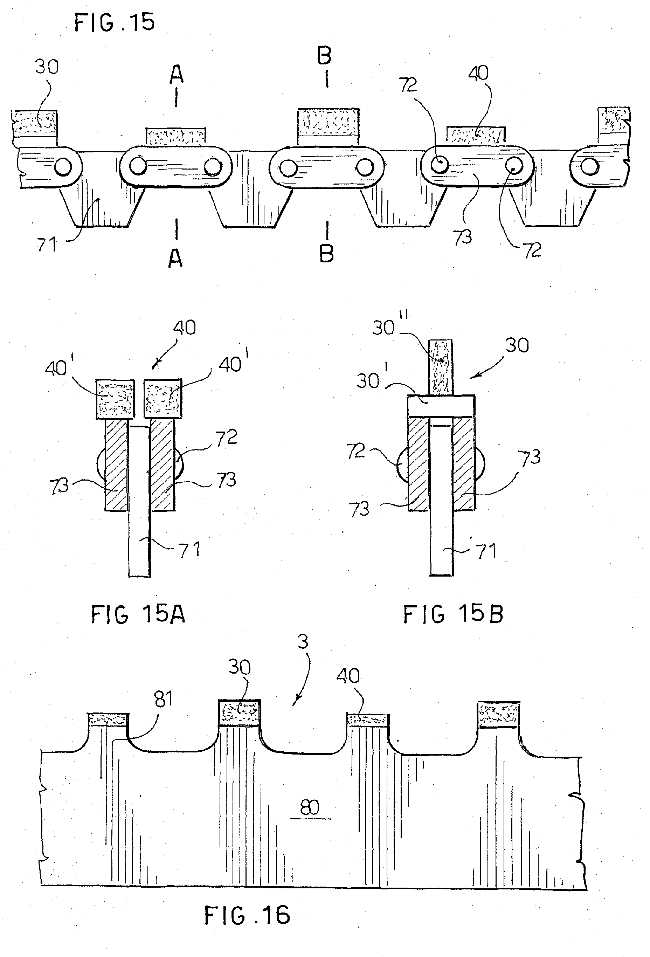

Figure 15 illustrates an embodiment of the invention wherein the support of the abrasive segments 3 consists of a chain 70. The chain 70 comprises a plurality of tracks 71, in the form of trapezoid plates, hinged by means of pins and respective links 73, in the form of trapezoid plates, disposed in opposite facing pairs. The widening abrasive segments 40 and the cutting abrasive segments 30 are fixed alternately on the links 73.

As shown in Figure 15A, in this case the widening abrasive segment comprises two abrasive blocks 40' disposed on the two opposite facing links 73 and spaced apart from each other. On the other hand, as shown in Figure 15B, the abrasive cutting segment 30 is shaped in cross section substantially as an upturned T and comprises a base of non abrasive material 30' supported on two opposite facing links 73 and an abrasive portion 30" which rises from said base 30'.

Figure 16 illustrates an embodiment of the invention wherein the support of the abrasive segments 3 consists of a band saw 80. The band saw 80 has a plurality of substantially rectangular and trapezoid teeth 81, disposed in a square wave shape. Widening segments 40 and cutting segments 30 are fixed alternately on the teeth 81.

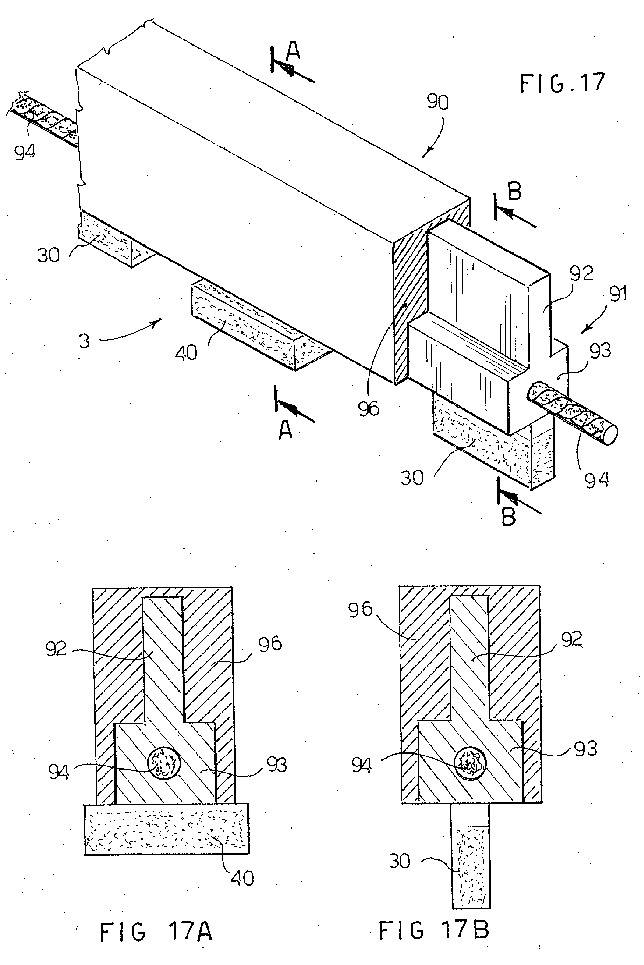

Figure 17 illustrates an embodiment of the invention wherein the support of the abrasive segments 3 consists of a rubberised belt 90. In this case the abrasive segments 3 have a metal support part 91 which supports the abrasive part. As shown also in Figures 17A and 17B, the metal support part 91 comprises a part with lesser thickness 92 and a part with greater thickness 93

The part with greater thickness 93 has a through hole wherethrough passes a metal cable 94 which serves to draw the rubberised belt 90. At the end of the part with greater thickness 93 of each segment is fixed an abrasive part 3, so as to form respectively a widening segment 40 and a cutting segment 30. The segments thus obtained, held in position according to a predetermined pitch by the cable 94, are sunk in rubbery material 96, such as rubber, neoprene and the like, so as to obtain a rubberized belt 90, wherein the abrasive part of the segments protrudes outward therefrom.

Numerous variations and modifications of detail within the reach of a person skilled in the art can be made to the present embodiments of the invention without departing from the scope of the invention as set forth by the appended claims.

## Claims

1. A cutting tool for stone materials (5) comprising a cutting support (2, 12, 70, 80, 90) having a thickness (s) and supporting a plurality of abrasive segments (3) disposed on the cutting edge thereof and protruding outward therefrom to produce cutting of the stone material, **characterised in that** said abrasive segments (3) comprise cutting abrasive segments (30) and widening abrasive segments (40), wherein the cutting abrasive segments (30) have a greater height than the widening abrasive segments (40) and wherein the widening abrasive segments (40) have a greater thickness with respect to the thickness (s) of said support (1, 12) and to the thickness of said abrasive cutting segments (30).

2. A cutting tool according to claim 1, **characterised in that** the thickness (sᵢ) of said cutting abrasive segments (30) is substantially the same as or slightly smaller than the thickness (s) of said support (2, 12, 70, 80, 90).

3. A cutting tool according to claim 1 or 2, **characterised in that** said cutting segments (30) alternate with said widening segments (40).

4. A cutting tool according to any one of the preceding claims, **characterised in that** said cutting segments (30) have a passive base part (32) without abrasive particles and an active upper part (31) with abrasive particles, wherein the base part (32) has a height substantially equal to the height of said widening segments (40).

5. A cutting tool according to any one of the preceding claims, **characterised in that** said widening segments (40) have a passive central part (42) without abrasive particles and two active side parts (41) with abrasive particles, wherein the passive central part (42) has a thickness (sₚ) substantially equal to or smaller than the thickness of said cutting segments (30).

6. A cutting tool according to any one of the preceding claims, **characterised in that** said widening segments (40) are substantially U-shaped in cross section, having a base (43) without abrasive particles and two side parts (44) with abrasive particles so as to form an empty central space (45) having a width (sᵥ) substantially equal to or smaller than the thickness of said cutting segments (30).

7. A cutting tool according to any one of the preceding claims, **characterised in that** said cutting segments (30) and/or said widening segments (40) have a tapered shape in cross section increasing in size towards the outside.

8. A cutting tool according to any one of the preceding claims, **characterised in that** said widening segments (40) are substantially L-shaped in cross section, having a base (46) without abrasive particles and a side part (44) with abrasive particles.

9. A cutting tool according to any one of the preceding claims, **characterised in that** it comprises abrasive guide sectors (60, 61, 16, 17) disposed on said support (10, 12) in a different position from the cutting edge.

10. A cutting tool according to any one of the preceding claims, **characterised in that** it is a reciprocating blade (1) provided with a rectangular plate support (2) with a linear cutting edge.

11. A cutting tool according to any one of claims 1 to 9, **characterised in that** it is a rotating disk (10) provided with a disk-shaped plate support (12) with a circumferential cutting edge.

12. A cutting tool according to any one of claims 1 to 9, **characterised in that** it is a band saw provided with a rectangular plate support (80) with a cutting edge having a plurality of rectangular or trapezoidal teeth (81) disposed in a square wave.

13. A cutting tool according to any one of claims 1 to 9, **characterised in that** it is a chain (70) comprising a plurality of tracks (71) hinged to a plurality of links (73), wherein said abrasive segments (3) are fixed to said links (73).

14. A cutting tool according to any one of claims 1 to 9, **characterised in that** it is a rubberised belt (90) comprising a plurality of support segments (91) supporting said abrasive segments (3), said support segments (91) being connected to a drawing cable (94) and sunk in rubber or neoprene so as to form a rubberised belt.

15. A cutting tool according to any one of the preceding claims, **characterised in that** said abrasive segments (3) are obtained by means of sintering particles of synthetic diamond.

16. A cutting tool for stone materials (5) comprising a cutting support (2, 12) supporting a plurality of abrasive segments (3) disposed on a cutting edge and protruding outward to cause cutting of the stone material, **characterised in that** it comprises abrasive guide sectors (60, 61, 16, 17) disposed on said support (10, 12) in a different position from the cutting edge.
